# EUROPÄISCHE PATENTANMELDUNG

(11) **EP 4 484 767 A2**
(43) Veröffentlichungstag der Anmeldung: **01.01.2025**
(21) Anmeldenummer: 24205453.4
(22) Anmeldetag: 02.09.2022
(51) Int. Cl.: F16B 12/14

(54) **VERBINDUNGSBESCHLAG ZUM VERBINDEN ZWEIER MÖBELTEILE SOWIE ZUGEHÖRIGER VERBINDUNGSBESCHLAG UND ZUGEHÖRIGE MÖBELANORDNUNG**

(30) Priorität: 07.10.2021 DE 202021105426 U
(62) Teilanmeldung aus: 22773423.3
(71) Anmelder: Häfele SE & Co KG, 72202 Nagold (DE)
(72) Erfinder: BIRKNER, Robert, 12524 Berlin (DE); ARNOLD, Lorenz, 6314 Unterägeri (CH)
(74) Vertreter: Kohler Schmid Möbus Patentanwälte

(57) **Zusammenfassung**

Bei einem Beschlagteil (1) eines Verbindungsbeschlags (21) weist ein Grundkörper (2) erfindungsgemäßen mindestens eine der folgenden Montageflächen (8a-8d) auf:
- eine an einem ersten Längsende (5a) des Grundkörpers (2) angeordnete, erste Montagefläche (8a), die zu der Befestigungsfläche parallel oder winklig, insbesondere rechtwinklig, angeordnet ist und mindestens ein Rastelement (17, 18) aufweist,
- eine an einem zweiten Längsende (5b) des Grundkörpers (2) angeordnete, zweite Montagefläche (8b), die gegenüber der Befestigungsfläche um die Längsachse (3) oder eine dazu parallele Achse geneigt angeordnet ist und mindestens ein Rastelement (17, 18) aufweist,
- eine durch einen Nutboden einer ein- oder beidseitig offenen Quernut (12) des Grundkörpers (2) gebildete, dritte Montagefläche (8c), die zu der Befestigungsfläche parallel oder winklig, insbesondere rechtwinklig, angeordnet ist und mindestens ein Rastelement (16, 17) aufweist, und
- eine an einer weiteren Längsseite (4d) des Grundkörpers (2) gebildete, vierte Montagefläche (8d), die zu der Befestigungsfläche parallel oder rechtwinklig angeordnet ist und, gesehen in Querrichtung, ein kammförmiges Oberflächenprofil (19) aufweist.

## Beschreibung

Die Erfindung betrifft ein Beschlagteil eines Verbindungsbeschlags zum Verbinden zweier Teile, insbesondere zweier Möbelteile, aufweisend einen Grundköper mit einer Längsachse, mit mindestens einer Längsseite, die eine plane Befestigungsfläche zur Anlage und Befestigung an einem zu verbindenden Teil ausbildet, und mit mindestens einer Montagefläche zur Anlage an einer Gegenmontagefläche eines weiteren Beschlagteils des Verbindungsbeschlags. Die Erfindung betrifft auch einen Verbindungsbeschlag mit mindestens zwei solchen Beschlagteilen sowie eine Anordnung, insbesondere Möbelanordnung, mit zwei Teilen, insbesondere Möbelteilen, die mittels des erfindungsgemäßen Verbindungsbeschlags miteinander verbunden sind.

Solche zweiteiligen Verbindungsbeschläge zum Verbinden zweier Möbelteile sind hinlänglich bekannt.

Der Erfindung liegt demgegenüber die Aufgabe zugrunde, ein universales Beschlagteil und einen zugehörigen Verbindungsbeschlag anzugeben, mit dem zwei Teile in möglichst vielen unterschiedlichen Orientierungen aneinander befestigt werden können.

Diese Aufgabe wird erfindungsgemäß durch ein Beschlagteil eines Verbindungsbeschlags zum Verbinden zweier Teile, insbesondere zweier Möbelteile, gelöst, aufweisend einen Grundkörper mit einer Längsachse, mit mindestens einer Längsseite, die eine plane Befestigungsfläche zur Anlage und Befestigung an einem zu verbindenden Teil ausbildet, und mit mindestens einer Montagefläche zur Anlage an einer Gegenmontagefläche eines weiteren Beschlagteils des Verbindungsbeschlags, wobei der Grundkörper erfindungsgemäß mindestens eine der folgenden Montageflächen aufweist:
- eine an einem ersten Längsende des Grundkörpers angeordnete, erste Montagefläche, die zu der Befestigungsfläche parallel oder winklig, insbesondere rechtwinklig, angeordnet ist und mindestens ein Rastelement aufweist,
- eine an einem zweiten Längsende des Grundkörpers angeordnete, zweite Montagefläche, die gegenüber der Befestigungsfläche um die Längsachse oder eine dazu parallele Achse geneigt angeordnet ist und mindestens ein Rastelement aufweist,
- eine durch einen Nutboden einer ein- oder beidseitig offenen Quernut des Grundkörpers gebildete, dritte Montagefläche, die zu der Befestigungsfläche parallel oder winklig, insbesondere rechtwinklig, angeordnet ist und mindestens ein Rastelement aufweist, und
- eine an einer weiteren Längsseite des Grundkörpers gebildete, vierte Montagefläche, die zu der Befestigungsfläche parallel oder rechtwinklig angeordnet ist und, gesehen in Querrichtung, ein kammförmiges Oberflächenprofil aufweist.

Erfindungsgemäß kann der Grundkörper eine, zwei, drei oder alle vier Montageflächen aufweisen.

Die Erfindung betrifft auch einen Verbindungsbeschlag mit zwei wie oben ausgebildeten, insbesondere baugleichen Beschlagteilen.

Die Erfindung betrifft schließlich auch eine Anordnung, insbesondere Möbelanordnung, mit zwei Teilen, insbesondere Möbelteilen, die mittels eines wie oben ausgebildeten Verbindungsbeschlags miteinander verbunden sind, wobei ein erstes Beschlagteil des Verbindungsbeschlags mit seiner Befestigungsfläche an dem einen, ersten Teil anliegt und daran befestigt ist und ein zweites Beschlagteil des Verbindungsbeschlags mit seiner Befestigungsfläche an dem anderen, zweiten Teil anliegt und daran befestigt ist und wobei die erste, die zweite oder die dritte Montagefläche des ersten Beschlagteils und die erste, die zweite oder die dritte Montagefläche des zweiten Beschlagteils aneinander anliegen und mittels der Rastelemente miteinander verrastet sind oder die vierte Montagefläche des ersten Beschlagteils und die vierte Montagefläche des zweiten Beschlagteils aneinander anliegen und mittels der kammförmigen Oberflächenprofile ineinandergreifen.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Ebenso können die vorstehend genannten und die noch weiter aufgeführten Merkmale je für sich oder zu mehreren in beliebigen Kombinationen Verwendung finden. Die gezeigten und beschriebenen Ausführungsbeispiele sind nicht als abschließende Aufzählung zu verstehen, sondern haben vielmehr beispielhaften Charakter für die Schilderung der Erfindung.

Es zeigen:
- Fign. 1a-1f: ein erfindungsgemäßes Beschlagteil in zwei perspektivischen Ansichten auf unterschiedliche Längsseiten des Beschlagteils (Fign. 1a, 1b), in zwei Draufsichten auf unterschiedliche Längsseiten des Beschlagteils (Fign. 1c, 1d) und in zweiten Seitenansichten der beiden Stirnseiten des Beschlagteils (Fign. 1e, 1f);
- Fign. 2a-2f: einen erfindungsgemäßen Verbindungsbeschlag mit zwei oder drei jeweils in unterschiedlicher Winkelausrichtung miteinander verbundenen erfindungsgemäßen Beschlagteilen;
- Fig. 3: einen erfindungsgemäßen Verbindungsbeschlag mit zwei ineinandergesteckten erfindungsgemäßen Beschlagteilen;
- Fig. 4: einen erfindungsgemäßen Verbindungsbeschlag mit zwei ineinandergreifenden erfindungsgemäßen Beschlagteilen;
- Fign. 5a-5c: den in Fig. 4 gezeigten Verbindungsbeschlag mit jeweils unterschiedlichem Querversatz der beiden Beschlagteile;
- Fign. 6a, 6b: eine erfindungsgemäße Möbelanordnung mit zwei Möbelteilen, die mittels des erfindungsgemäßen Verbindungsbeschlags miteinander verbunden sind;
- Fign. 7a, 7b: eine erfindungsgemäße Möbelanordnung mit zwei Möbelteilen, die mittels des erfindungsgemäßen Verbindungsbeschlags mit einem Spaltmaß von 4 mm angeordnet sind; und
- Fig. 8: eine Möbelanordnung mit drei Möbelteilen, wobei das mittlere Möbelteil mit jeweils zwei erfindungsgemäßen Verbindungsbeschlägen an den beiden anderen Möbelteilen befestigt ist.

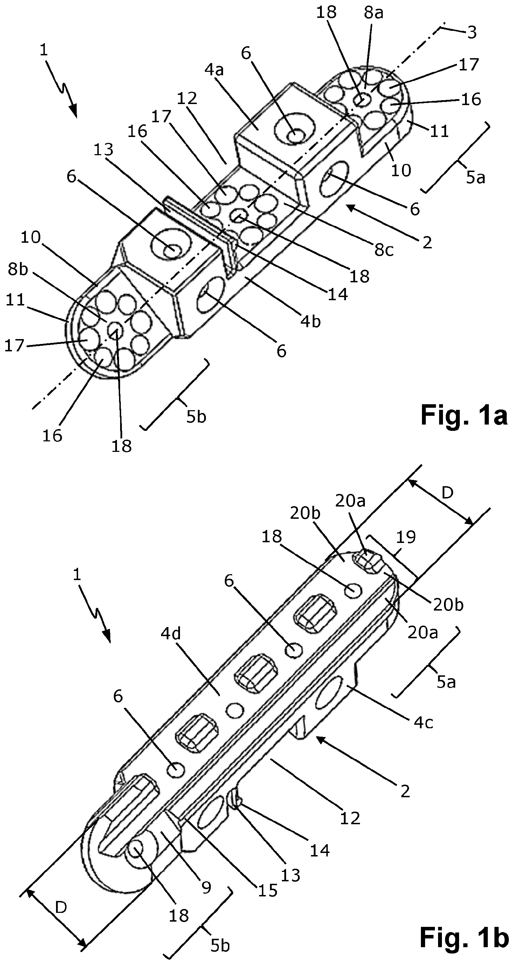

Das in **Fign. 1a-1f** gezeigte Beschlagteil **1** dient zum Verbinden verschieden orientierter Möbelteile. Das Beschlagteil 1 weist einen zumindest abschnittsweise quaderförmigen, länglichen Grundkörper **2** mit einer Längsachse **3,** mit vier jeweils paarweise parallelen Längsseiten **4a-4d** und mit zwei Längsenden **5a, 5b** auf. Zumindest eine der vier Längsseiten 4a-4d bildet eine plane Befestigungsfläche aus, mit der das Beschlagteil 1 an einem Möbelteil anliegt und daran befestigt werden kann. Im gezeigten Ausführungsbeispiel bilden alle vier Längsseiten 4a-4d jeweils eine plane Befestigungsfläche aus, mit der das Beschlagteil 1 an einem Möbelteil befestigt werden kann. Dazu weist jede Längsseite des Grundkörpers 2, welche eine Befestigungsfläche ausbildet, ein oder mehrere, hier zwei Durchgangslöcher **6** (z.B. im 32mm-Raster) auf.

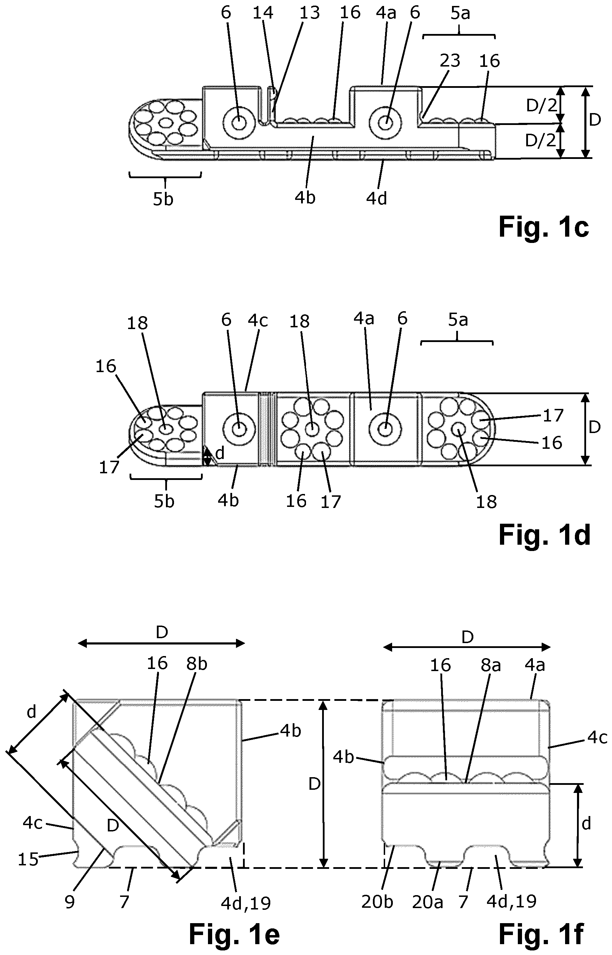

Wie in Fign. 1e und 1f gezeigt, weist der Grundkörper 2, gesehen in Richtung der Längsachse 3, eine Außenkontur mit einem gestrichelt dargestellten umhüllenden Quadrat **7** mit Kantenlänge **D** auf.

Der Grundkörper 2 weist an seinem einen, ersten Längsende 5a eine erste Montagefläche **8a** und an seinem anderen, zweiten Längsende 5b eine zweite Montagefläche **8b** auf, wobei die Montageflächen 8a, 8b jeweils durch einen Absatz des Grundkörpers 2 gebildet sind. Die erste Montagefläche 8a ist zu den Längsseiten 4a, 4d parallel und zu den Längsseiten 4b, 4c rechtwinklig angeordnet. Die zweite Montagefläche 8b ist gegenüber den Längsseiten 4a-4d jeweils um die Längsachse 3 geneigt, hier lediglich beispielhaft jeweils unter 45°. Die erste und die zweite Montagefläche 8a, 8b sind gegeneinander um die Längsachse 3 um 45° verdreht angeordnet, wobei die Längsachse 3 des Grundkörpers 2 in der Ebene der ersten und zweiten Montageflächen 8a, 8b liegt.

Die der ersten Montagefläche 8a gegenüberliegende Rückseite des ersten Längsendes 5a ist durch die zur ersten Montagefläche 8a parallele Längsseite 4d gebildet. Die der zweiten Montagefläche 8b gegenüberliegende Rückseite des zweiten Längsendes 5b ist hingegen durch eine zur zweiten Montagefläche 8b parallele separate Rückseite **9** gebildet. Die Dicke der Längsenden 5a, 5b, also im Fall des ersten Längsendes 5a der Abstand der ersten Montagefläche 8a zur Längsseite 4d und im Fall des zweiten Längsendes 5b der Abstand der zweiten Montagefläche 8b zur Rückseite 9, entspricht der halben Kantenlänge D des Grundkörpers 2, also D/2 (Fig. 1c). Die Längsenden 5a, 5b weisen, gesehen in Richtung der Längsachse 3, jeweils einen inneren Abschnitt **10,** dessen Breite gleich der Kantenlänge D des Grundkörpers 2 ist (Fig. 1e), und einen sich daran außen anschließenden, stirnseitig verrundeten, äußeren Abschnitt **11** auf.

Der Grundkörper 2 weist außerdem, vorzugsweise mittig, zwischen seinen beiden Längsenden 5a, 5b eine durch den Nutboden einer beidseitig offenen Quernut **12** gebildete, dritte Montagefläche **8c** auf, die zu den Längsseiten 4a, 4d parallel und zu den Längsseiten 4b, 4c rechtwinklig angeordnet ist. Die erste und die dritte Montagefläche 8a, 8c sind in der gleichen Ebene angeordnet, so dass die Längsachse 3 auch in der Ebene der dritten Montagefläche 8c liegt. Die sich in Richtung der Längsachse 3 erstreckende Nutbreite und die sich quer zur Längsachse 3 erstreckende Nutlänge der Quernut 12 sind gleich groß wie die Kantenlänge D.

Die eine der beiden Nutwände der Quernut 12 ist durch einen am Nutboden angebundenen Federsteg **13** gebildet, der an seinem freien Stegende ein Rastelement **14** aufweist, hier z.B. in Form eines quer zur Längsachse 3 verlaufenden Profilvorsprungs. An einer (4c) der beiden Längsseiten 4b, 4c, zu der die Quernut 11 quer zur Längsachse 3 offen ist, weist der Grundkörper 2 ein zu dem Rastelement 14 des Federstegs 13 komplementäres Rastelement **15** auf, hier z.B. in Form einer längs der gesamten Längsseite 4c verlaufenden Profilmulde.

Die erste, die zweite und die dritte Montagefläche 8a-8c weisen jeweils die gleiche Rastanordnung von mehreren, um ein Zentrum herum angeordneten Rastelementen auf, hier z.B. in Form von Rastvorsprüngen und -ausnehmungen **16, 17.** Die Rastanordnung hat bezüglich des Zentrums eine mehrzählige Drehsymmetrie und ist hier ein Kreis, auf dem abwechselnd Rastvorsprünge 16 und -ausnehmungen 17 in 45°-Winkelabständen angeordnet sind, wodurch sich eine hier vierzählige Drehsymmetrie ergibt. Das Zentrum der Rastanordnung ist durch ein Durchgangsloch **18** in der jeweiligen Montagefläche 8a-8c gebildet.

Der Grundkörper 2 weist ferner eine durch die Längsseite 4d gebildete, vierte Montagefläche **8d** mit einem, gesehen in Querrichtung, kammförmigen Oberflächenprofil **19** auf. Das kammförmige Oberflächenprofil 19 weist abwechselnd hohe und tiefe Kammprofilabsätze **20a, 20b** mit jeweils gleicher Profilbreite auf.

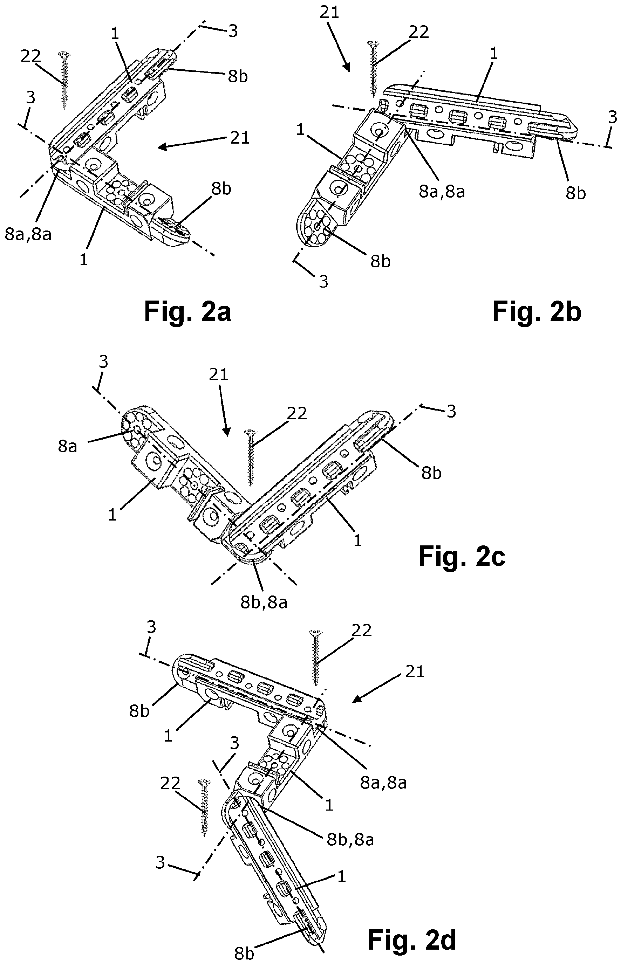

Fign. 2a-2f zeigen einen Verbindungsbeschlag **21** mit zwei oder drei Beschlagteilen 1, die mittels ihrer ersten, zweiten oder dritten Montageflächen 8a-8c aneinander anliegen und optional mittels Schrauben **22** miteinander verbunden sind.

In **Fig. 2a** sind zwei Beschlagteile 1 mit ihren Längsachsen 3 rechtwinklig zueinander ausgerichtet und liegen mit ihren ersten Montageflächen 8a aneinander an.

In **Fig. 2b** sind zwei Beschlagteile 1 mit ihren Längsachsen 3 unter 135° zueinander ausgerichtet und liegen mit ihren ersten Montageflächen 8a aneinander an.

In **Fig. 2c** sind zwei Beschlagteile 1 mit ihren Längsachsen 3 rechtwinklig zueinander ausgerichtet und liegen mit einer ersten und einer zweiten Montageflächen 8a, 8b aneinander an.

In **Fig. 2d** sind drei Beschlagteile 1 mit ihren Längsachsen 3 zickzackförmig zueinander ausgerichtet. Das in Fig. 2d obere und das mittlere Beschlagteil 1 sind mit ihren Längsachsen 3 rechtwinklig zueinander ausgerichtet und liegen mit ihren ersten Montageflächen 8a, 8a aneinander an. Das untere und das mittlere Beschlagteil 1 sind mit ihren Längsachsen 3 unter 135° zueinander ausgerichtet und liegen mit einer ersten und einer zweiten Montageflächen 8a, 8b aneinander an.

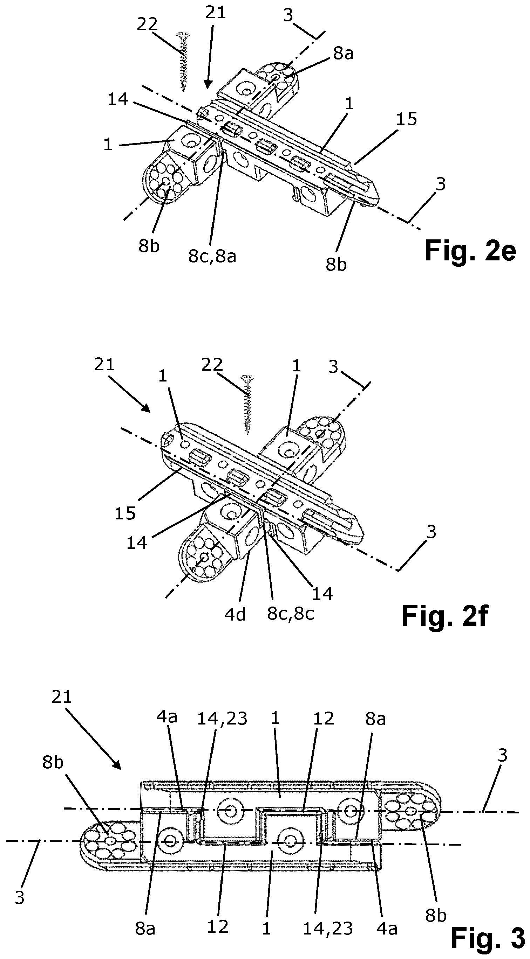

In **Fig. 2e** sind zwei Beschlagteile 1 mit ihren Längsachsen 3 rechtwinklig zueinander ausgerichtet und liegen mit einer ersten und einer dritten Montageflächen 8a, 8c aneinander an. Dabei greift der Profilvorsprung 14 des Federstegs 13 des einen Beschlagteils 1 in die Profilmulde 15 des anderen Beschlagteils 1 ein, wodurch die beiden Beschlagteile 1 miteinander verrastet sind.

In **Fig. 2f** sind zwei Beschlagteile 1 mit ihren Längsachsen 3 rechtwinklig zueinander ausgerichtet und liegen mit ihren dritten Montageflächen 8c, 8c aneinander an, indem die gegeneinander um 90° verdreht angeordneten Quernuten 12 der beiden Beschlagteile 1 ineinandergesteckt sind. Dabei greift einerseits der Profilvorsprung 14 des Federstegs 13 des in Fig. 2f unteren Beschlagteils 1 in die Profilmulde 15 des oberen Beschlagteils 1, und andererseits hintergreift bzw. untergreift der Profilvorsprung 14 des Federstegs 13 des oberen Beschlagteils 1 den unteren Absatz 20b der Längsseite 4d des unteren Beschlagteils 1, wodurch die beiden Beschlagteile 1 miteinander doppelt verrastet sind.

In den Fign. 2a-2f greifen die Rastvorsprünge und -ausnehmungen 16, 17 der in gewünschter Winkelausrichtung aneinander anliegenden Montageflächen jeweils ineinander ein. Eine Schraube 22 ist durch die Durchgangslöcher 18 der aneinander anliegenden Montageflächen geschraubt, wodurch die Montageflächen und somit die beiden Beschlagteile 1 in ihrer verrasteten Winkelausrichtung gesichert sind.

**Fig. 3** zeigt einen Verbindungsbeschlag 21 mit zwei Beschlagteilen 1, die mit ihren Längsachsen 3 parallel zueinander ausgerichtet sind und mit ihren Längsseiten 4a ineinandergesteckt sind. Die Längsseiten 4a der Beschlagteile 1 weisen aufgrund der zurückgestuften ersten Montagefläche 8a und der Quernut 12, deren Nutboden sich auf gleicher Höhe wie die erste Montagefläche 8a befindet, ein kammförmiges Steckprofil auf. Die beiden Beschlagteile 1 sind mit ihren kammförmigen Steckprofilen ineinandergesteckt. Dabei greift die Profilvorsprung 14 am Federsteg 13 des einen Beschlagteils in eine Rastmulde **23** (Fig. 1c) des anderen Beschlagteils, die an der stirnseitigen Stufe zwischen der ersten Montagefläche 8a und der Längsseite 4a vorhanden ist, wodurch die beiden Beschlagteile 1 miteinander doppelt verrastet sind. Befestigungsschrauben 22 können durch die Durchgangslöcher 6, 18 geschraubt werden, um die beiden Beschlagteile 1 aneinander zu befestigen. Dieser Verbindungsbeschlag 21 kann beispielsweise als Aufdopplungsbeschlag zweier Möbelplatten eingesetzt werden.

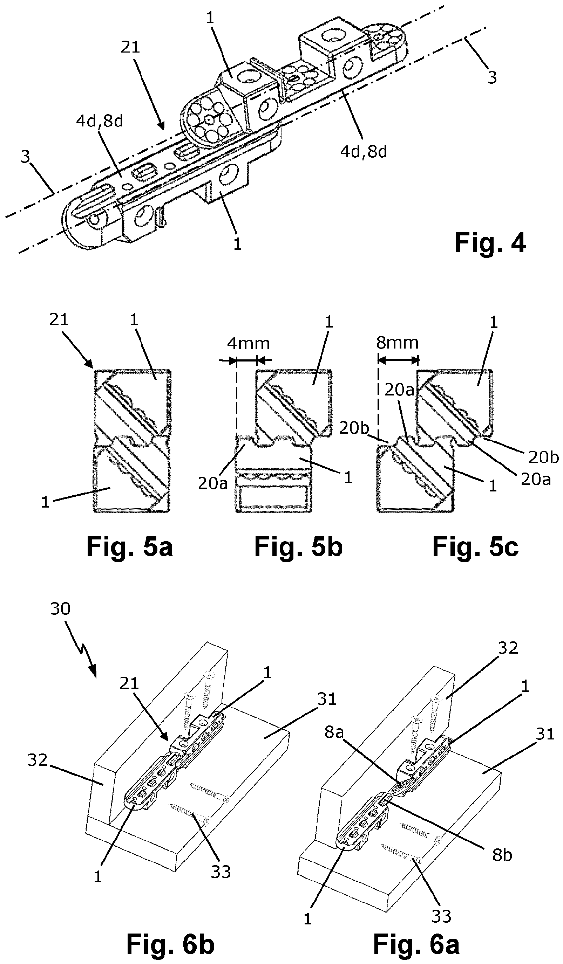

**Fig. 4** zeigt einen Verbindungsbeschlag 21 mit zwei Beschlagteilen 1, die mit ihren Längsachsen 3 parallel zueinander ausgerichtet sind und mit ihren kammförmigen Montageflächen 8d ineinandergreifen. Dabei greifen die hohen Kammprofilabsätze 20a des einen Beschlagteils 1 in die tiefen Kammprofilabsätze 20b des anderen Beschlagteils 1 ein. Wie in **Fign. 5a-5c** gezeigt, können die Beschlagteile 1 je nach dem, welche hohen und tiefen Kammprofilabsätze 20a, 20b ineinandergreifen, mit unterschiedlichem Querversatz von 0 mm (Fig. 5a), 4 mm (Fig. 5b) oder 8 mm (Fig. 5c) versetzt sein. Um den Querversatz von 4 mm zu erreichen, ist in Fig. 5b das untere Beschlagteil 1 gegenüber Fign. 5a, 5c seitenverkehrt bzw. um 180° gewendet angeordnet.

Statt in Querrichtung beidseitig offen, wie in den Ausführungsbeispielen gezeigt, kann die Quernut 12 alternativ in Querrichtung auch nur einseitig offen sein. Statt des in den Ausführungsbeispielen gezeigten, umhüllenden Quadrats 7 kann der Grundkörper, gesehen in Richtung der Längsachse 3, auch eine Außenkontur mit einem umhüllenden Rechteck oder Polygon aufweisen. Statt der in den Ausführungsbeispielen gezeigten, vier Längsseiten 4a-4d kann der Grundkörper 2 auch weniger Längsseiten aufweisen, also beispielsweise auch nur eine, zwei oder drei Längsseiten. Statt der in den Ausführungsbeispielen gezeigten, vier Montageflächen 8a, 8b kann der Grundkörper 2 auch weniger Montageflächen aufweisen, also beispielsweise auch nur eine, zwei oder drei Montageflächen. Statt an ein Teil anzuschrauben, kann die Befestigungsfläche des Beschlagteil 1 auch an das Teil angeklebt werden.

Zusätzlich kann mit nur einem einzigen Beschlagteil 1 eine Eckverbindung zwischen zwei Teilen ausgebildet werden, indem zwei rechtwinklige Längsseiten jeweils an die Teile angeschraubt werden.

In den Fign. 1 bis 5 sind die an den jeweiligen Beschlagteilen 1 befestigten Teile nicht gezeigt. Die Teile können beispielsweise unter 45°, 90°, 135° oder 180° zueinander orientiert sein oder einen T-Stoß ausbilden.

In **Fign. 6a, 6b** ist eine Möbelanordnung **30** mit zwei rechtwinklig aufeinander stehenden, plattenförmigen Möbelteilen **31, 32** gezeigt, die mittels des Verbindungsbeschlags 21 miteinander verbunden sind. Wie in Fig. 6a gezeigt, werden das eine, erste Beschlagteil 1 und das andere, zweite Beschlagteil 1 jeweils mit ihrer Längsseite 4a an das eine, erste Möbelteil 31 bzw. an das andere, zweite Möbelteil 32 mittels Schrauben **33** angeschraubt, die durch die Durchgangslöcher 6 gehen. Anschließend werden die rechtwinklig aufeinander stehenden Möbelteile 31, 32 - bei parallel zueinander ausgerichteten Längsachsen 3 der beiden Beschlagteile 1 - verschoben, bis die schrägen zweiten Montageflächen 8b der beiden Beschlagteile 1 aneinander anliegen und mittels der Rastelemente 16, 17 miteinander verrastet sind (Fig. 6b). Dabei untergreifen sich die zweiten Montageflächen 8b gegenseitig, wodurch die beiden Möbelteile 31, 32 zueinander fixiert sind. Insgesamt ergibt sich so eine starre und starke Eckverbindung.

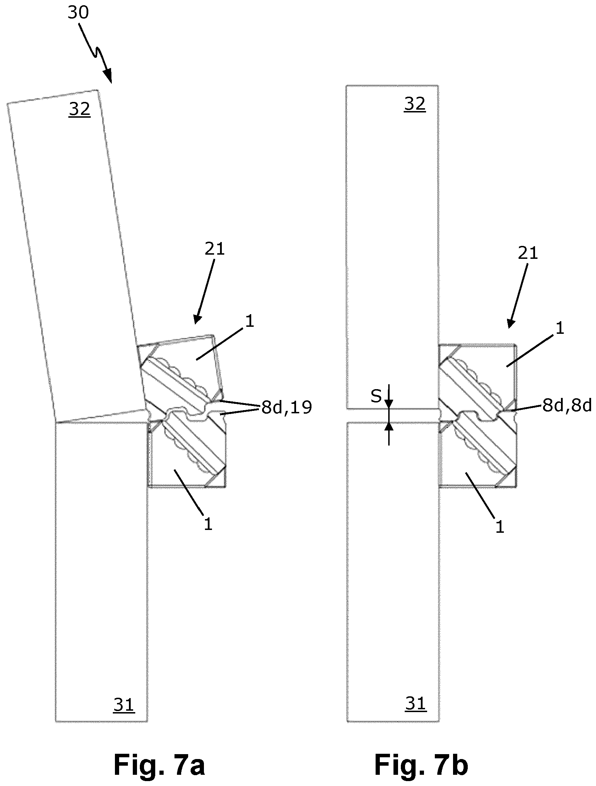

**Fign. 7a, 7b** zeigen eine Möbelanordnung 30 mit zwei Möbelteilen 31, 32, die mittels des Verbindungsbeschlags 21 auf ein Spaltmaß **s** von 4 mm eingestellt sind. Die Beschlagteile 1 sind jeweils mit ihrer Längsseite 4c an die Plattenseiten der Möbelteile 31, 32 angeschraubt, wobei das in Fig. 7 untere Beschlagteil 1 über die Oberkante des unteren Möbelteils 31 nach oben und das obere Beschlagteil 1 über die Unterkante des unteren Möbelteils 31 nach unten übersteht, und zwar mit einem dem Spaltmaß s entsprechenden Gesamtüberstand. Die beiden Möbelteile 31, 32 werden zunächst Stirnseite auf Stirnseite und Beschlagteil auf Beschlagteil 1, d.h. schräg, aufeinandergestellt (Fig. 7a). Anschließend werden die beiden Beschlagteile 31, 32 in ihre flächenbündige Lage verschwenkt, wobei, wie in Fig. 5a gezeigt, die hohen und tiefen Kammprofilabsätze 20a, 20b der beiden Beschlagteile 31, 32 ineinandergreifen (Fig. 7b). Die Schwenkachse ist durch die ineinandergreifenden Beschlagteile 1 definiert.

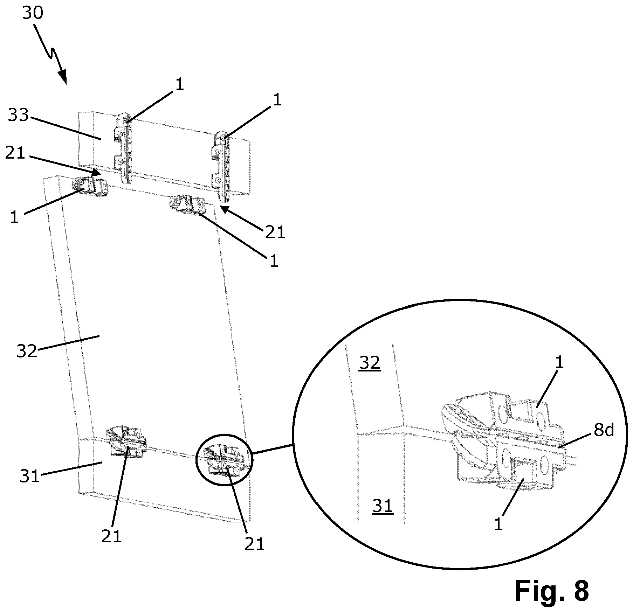

**Fig. 8** zeigt eine Möbelanordnung 30 mit drei Möbelteilen 31, 32, **33,** wobei das mittlere Möbelteil 32 mit jeweils zwei Verbindungsbeschlägen 21 an den beiden anderen Möbelteilen befestigt ist. Die beiden unteren Verbindungsbeschlägen 21 sind wie in Fig. 7 und die beiden oberen Verbindungsbeschläge 21 wie in Fig. 2e ausgerichtet und an den jeweiligen Möbelteilen befestigt. Zunächst wird das mittlere Möbelteil 32, wie in Fig. 7a gezeigt, mittels der beiden unteren Verbindungsbeschläge 21 schräg auf das untere Möbelteil 31 gestellt. Anschließend wird das mittlere Möbelteil 32 in die mit den anderen beiden Möbelteilen 31, 33 flächenbündige Lage verschwenkt, wodurch die beiden Beschlagteile 1 der oberen Verbindungsbeschläge 21 miteinander verrasten. Abschließend können die Beschlagteile 1 der Verbindungsbeschläge 21 mittels Schrauben 22 aneinander gesichert werden.

Die vorliegende Erfindung weist auch die Aspekte auf, die in den nachfolgenden Klauseln definiert sind, welche einen Teil der Beschreibung bilden, bei denen es sich aber nicht um Ansprüche handelt, in Übereinstimmung mit der Entscheidung J15/88 der Beschwerdekammern des Europäischen Patentamts.
1. Beschlagteil (1) eines Verbindungsbeschlags (21) zum Verbinden zweier Teile (31, 32, 33), insbesondere zweier Möbelteile, aufweisend einen Grundkörper (2) mit einer Längsachse (3), mit mindestens einer Längsseite (4a-4d), die eine plane Befestigungsfläche zur Anlage und Befestigung an einem zu verbindenden Teil (31, 32, 33) ausbildet, und mit mindestens einer Montagefläche zur Anlage an einer Gegenmontagefläche eines weiteren Beschlagteils des Verbindungsbeschlags (21),
   dadurch gekennzeichnet,
   dass der Grundkörper (2) mindestens eine der folgenden Montageflächen (8a-8d) aufweist:
   - eine an einem ersten Längsende (5a) des Grundkörpers (2) angeordnete, erste Montagefläche (8a), die zu der Befestigungsfläche parallel oder winklig, insbesondere rechtwinklig, angeordnet ist und mindestens ein Rastelement (17, 18) aufweist,
   - eine an einem zweiten Längsende (5b) des Grundkörpers (2) angeordnete, zweite Montagefläche (8b), die gegenüber der Befestigungsfläche um die Längsachse (3) oder eine dazu parallele Achse geneigt angeordnet ist und mindestens ein Rastelement (17, 18) aufweist,
   - eine durch einen Nutboden einer ein- oder beidseitig offenen Quernut (12) des Grundkörpers (2) gebildete, dritte Montagefläche (8c), die zu der Befestigungsfläche parallel oder winklig, insbesondere rechtwinklig, angeordnet ist und mindestens ein Rastelement (16, 17) aufweist, und
   - eine an einer weiteren Längsseite (4d) des Grundkörpers (2) gebildete, vierte Montagefläche (8d), die zu der Befestigungsfläche parallel oder rechtwinklig angeordnet ist und, gesehen in Querrichtung, ein kammförmiges Oberflächenprofil (19) aufweist.
2. Beschlagteil nach Klausel 1, dadurch gekennzeichnet, dass der Grundkörper (2) zumindest abschnittsweise quaderförmig mit vier Längsseiten (4a-4d) ausgebildet ist, wobei eine, mehrere oder alle vier Längsseiten (4a-4d) jeweils eine Befestigungsfläche ausbilden.
3. Beschlagteil nach Klausel 1 oder 2, dadurch gekennzeichnet, dass, gesehen in Richtung der Längsachse (3), der Grundkörper (2) eine Außenkontur mit einem umhüllenden Rechteck, insbesondere mit einem umhüllenden Quadrat (7), aufweist.
4. Beschlagteil nach einer der vorhergehenden Klauseln, dadurch gekennzeichnet, dass die erste Montagefläche (8a) an einem ersten Längsende (5a) des Grundkörpers (2) und die zweite Montagefläche (8b) an einem zweiten Längsende (5b) des Grundkörpers (2) angeordnet sind.
5. Beschlagteil nach Klausel 4, dadurch gekennzeichnet, dass die erste und die zweite Montagefläche (8a, 8b) gegeneinander um die Längsachse (3) oder eine dazu parallele Achse verdreht, insbesondere um 45° verdreht, angeordnet sind.
6. Beschlagteil nach einer der vorhergehenden Klauseln, dadurch gekennzeichnet, dass die erste, die zweite und/oder die dritte Montagefläche (8a-8c) jeweils die gleiche Rastanordnung von mehreren Rastelementen (16, 17) aufweisen.
7. Beschlagteil nach Klausel 6, dadurch gekennzeichnet, dass die Rastanordnung mehrere, um ein Zentrum herum angeordnete Rastelementen (16, 17) aufweist und bezüglich des Zentrums eine mehrzählige, insbesondere vierzählige Drehsymmetrie aufweist.
8. Beschlagteil nach Klausel 6 oder 7, dadurch gekennzeichnet, dass die Rastanordnung ein Kreis ist, auf dem abwechselnd Rastvorsprünge (16) und -ausnehmungen (17) in jeweils gleichen Winkelabständen, insbesondere in 45°-Winkelabständen, angeordnet sind.
9. Beschlagteil nach Klausel 7 oder 8, dadurch gekennzeichnet, dass im Zentrum der Rastanordnung ein Durchgangsloch (18) der jeweiligen Montagefläche (8a-8c) angeordnet ist.
10. Beschlagteil nach einer der vorhergehenden Klauseln, dadurch gekennzeichnet, dass eine sich in Richtung der Längsachse (3) erstreckende Nutbreite der Quernut (12) gleich einer sich quer zur Längsachse erstreckende Nutlänge der Quernut (12) und/oder gleich der Breite des oder der Längsenden (5a, 5b) ist.
11. Beschlagteil nach einer der vorhergehenden Klauseln, dadurch gekennzeichnet, dass die erste und die zweite Montagefläche (8a, 8b) jeweils durch einen Absatz des Grundkörpers (2) gebildet sind.
12. Beschlagteil nach einer der vorhergehenden Klauseln, dadurch gekennzeichnet, dass die Dicke des oder der Längsenden (5a, 5b) halb so hoch wie die Dicke des Grundkörpers (2) ist.
13. Beschlagteil nach einer der vorhergehenden Klauseln, dadurch gekennzeichnet, dass die Breite des ersten und/oder zweiten Längsendes (5a, 5b), gleich der Breite des Grundkörpers (2) ist.
14. Beschlagteil nach einer der vorhergehenden Klauseln, dadurch gekennzeichnet, dass eine der beiden Nutwände der Quernut (12) durch einen am Nutboden angebundenen Federsteg (13) gebildet ist, der an seinem freien Stegende ein Rastelement (14) aufweist.
15. Beschlagteil nach Klausel 14, dadurch gekennzeichnet, dass der Grundkörper (2) an einer Längsseite (4b, 4c), zu der die Quernut (12) quer zur Längsachse (3) offen ist, ein zu dem Rastelement (14) des Federstegs (13) komplementäres Rastelement (15) aufweist.
16. Beschlagteil nach Klausel 14 oder 15, dadurch gekennzeichnet, dass der Grundkörper (2) an einer stirnseitigen Stufe zwischen der ersten Montagefläche (8a) und einer Längsseite (4a) ein zu dem Rastelement (14) des Federstegs (13) komplementäres Rastelement (23) aufweist.
17. Beschlagteil nach einer der vorhergehenden Klauseln, dadurch gekennzeichnet, dass die erste und die dritte Montagefläche (8a, 8c) an der gleichen Längsseite (4a) des Grundkörpers ausgebildet sind und, gesehen in Längsrichtung des Grundkörpers (2), ein kammförmiges Steckprofil der Längsseite (4a) ausbilden.
18. Beschlagteil nach einer der vorhergehenden Klauseln, dadurch gekennzeichnet, dass die mindestens eine Längsseite (4a-4c), insbesondere jede Längsseite des Grundkörpers (2), die eine Befestigungsfläche ausbildet, mindestens ein Durchgangsloch (6), insbesondere mehrere Durchgangslöcher (6), aufweist.
19. Beschlagteil nach einer der vorhergehenden Klauseln, dadurch gekennzeichnet, dass das kammförmige Oberflächenprofil (19) abwechselnd hohe und tiefe Profilabsätze (20a, 20b) mit jeweils gleicher Profilbreite aufweist.
20.Verbindungsbeschlag (21) mit mindestens zwei insbesondere baugleichen Beschlagteilen (1) nach einer der vorhergehenden Klauseln.
21. Anordnung (30), insbesondere Möbelanordnung, mit zwei Teilen (31, 32), insbesondere Möbelteilen, die mittels eines Verbindungsbeschlags (21) nach Klausel 20 miteinander verbunden sind, wobei ein erstes Beschlagteil (1) des Verbindungsbeschlags (21) mit seiner Befestigungsfläche an dem einen, ersten Teil (31) anliegt und daran befestigt ist und ein zweites Beschlagteil (1) des Verbindungsbeschlags (21) mit seiner Befestigungsfläche an dem anderen, zweiten Teil (32) anliegt und daran befestigt ist und wobei die erste, die zweite oder die dritte Montagefläche (8a-8c) des ersten Beschlagteils (1) und die erste, die zweite oder die dritte Montagefläche (8a-8c) des zweiten Beschlagteils (1) aneinander anliegen und mittels der Rastelemente (16, 17) miteinander verrastet sind oder die vierte Montagefläche (8d) des ersten Beschlagteils (1) und die vierte Montagefläche (8d) des zweiten Beschlagteils (1) aneinander anliegen und mittels der kammförmigen Oberflächenprofile (19) ineinandergreifen.
22. Anordnung nach Klausel 21, dadurch gekennzeichnet, dass das erste und das zweite Beschlagteil (1) mittels Schrauben (33), welche durch Durchgangslöcher (6) der Befestigungsfläche greifen, an die Teile (31, 32) angeschraubt sind.
23. Anordnung nach Klausel 21 oder 22, dadurch gekennzeichnet, dass die erste, die zweite oder die dritte Montagefläche (8a-8c) des ersten Beschlagteils (1) und die erste, die zweite oder die dritte Montagefläche (8a-8c) des zweiten Beschlagteils (1) mittels Schrauben (22), welche durch Durchgangslöcher (18) der Montageflächen (8a-8c) greifen, aneinander angeschraubt sind.

## Patentansprüche

1. Beschlagteil (1) eines Verbindungsbeschlags (21) zum Verbinden zweier Teile (31, 32, 33), insbesondere zweier Möbelteile, aufweisend einen Grundkörper (2) mit einer Längsachse (3), mit mindestens einer Längsseite (4a-4d), die eine plane Befestigungsfläche zur Anlage und Befestigung an einem zu verbindenden Teil (31, 32, 33) ausbildet, und mit mindestens einer Montagefläche zur Anlage an einer Gegenmontagefläche eines weiteren Beschlagteils des Verbindungsbeschlags (21),
**dadurch gekennzeichnet,**
**dass** der Grundkörper (2) mindestens eine der folgenden Montageflächen (8a-8d) aufweist:
- eine an einem ersten Längsende (5a) des Grundkörpers (2) angeordnete, erste Montagefläche (8a), die zu der Befestigungsfläche parallel oder winklig, insbesondere rechtwinklig, angeordnet ist und mindestens ein Rastelement (17, 18) aufweist,
- eine an einem zweiten Längsende (5b) des Grundkörpers (2) angeordnete, zweite Montagefläche (8b), die gegenüber der Befestigungsfläche um die Längsachse (3) oder eine dazu parallele Achse geneigt angeordnet ist und mindestens ein Rastelement (17, 18) aufweist,
- eine durch einen Nutboden einer ein- oder beidseitig offenen Quernut (12) des Grundkörpers (2) gebildete, dritte Montagefläche (8c), die zu der Befestigungsfläche parallel oder winklig, insbesondere rechtwinklig, angeordnet ist und mindestens ein Rastelement (16, 17) aufweist, und
- eine an einer weiteren Längsseite (4d) des Grundkörpers (2) gebildete, vierte Montagefläche (8d), die zu der Befestigungsfläche parallel oder rechtwinklig angeordnet ist und, gesehen in Querrichtung, ein kammförmiges Oberflächenprofil (19) aufweist.

2. Beschlagteil nach Anspruch 1, **dadurch gekennzeichnet, dass** der Grundkörper (2) zumindest abschnittsweise quaderförmig mit vier Längsseiten (4a-4d) ausgebildet ist, wobei eine, mehrere oder alle vier Längsseiten (4a-4d) jeweils eine Befestigungsfläche ausbilden.

3. Beschlagteil nach Anspruch 1 oder 2, **dadurch gekennzeichnet, dass**, gesehen in Richtung der Längsachse (3), der Grundkörper (2) eine Außenkontur mit einem umhüllenden Rechteck, insbesondere mit einem umhüllenden Quadrat (7), aufweist.

4. Beschlagteil nach einem der vorhergehenden Ansprüche, **dadurch gekennzeichnet, dass** die erste Montagefläche (8a) an einem ersten Längsende (5a) des Grundkörpers (2) und die zweite Montagefläche (8b) an einem zweiten Längsende (5b) des Grundkörpers (2) angeordnet sind.

5. Beschlagteil nach einem der vorhergehenden Ansprüche, **dadurch gekennzeichnet, dass** die erste, die zweite und/oder die dritte Montagefläche (8a-8c) jeweils die gleiche Rastanordnung von mehreren Rastelementen (16, 17) aufweisen.

6. Beschlagteil nach einem der vorhergehenden Ansprüche, **dadurch gekennzeichnet, dass** eine sich in Richtung der Längsachse (3) erstreckende Nutbreite der Quernut (12) gleich einer sich quer zur Längsachse erstreckende Nutlänge der Quernut (12) und/oder gleich der Breite des oder der Längsenden (5a, 5b) ist.

7. Beschlagteil nach einem der vorhergehenden Ansprüche, **dadurch gekennzeichnet, dass** die erste und die zweite Montagefläche (8a, 8b) jeweils durch einen Absatz des Grundkörpers (2) gebildet sind.

8. Beschlagteil nach einem der vorhergehenden Ansprüche, **dadurch gekennzeichnet, dass** die Dicke des oder der Längsenden (5a, 5b) halb so hoch wie die Dicke des Grundkörpers (2) ist.

9. Beschlagteil nach einem der vorhergehenden Ansprüche, **dadurch gekennzeichnet, dass** die Breite des ersten und/oder zweiten Längsendes (5a, 5b), gleich der Breite des Grundkörpers (2) ist.

10. Beschlagteil nach einem der vorhergehenden Ansprüche, **dadurch gekennzeichnet, dass** eine der beiden Nutwände der Quernut (12) durch einen am Nutboden angebundenen Federsteg (13) gebildet ist, der an seinem freien Stegende ein Rastelement (14) aufweist.

11. Beschlagteil nach einem der vorhergehenden Ansprüche, **dadurch gekennzeichnet, dass** die erste und die dritte Montagefläche (8a, 8c) an der gleichen Längsseite (4a) des Grundkörpers ausgebildet sind und, gesehen in Längsrichtung des Grundkörpers (2), ein kammförmiges Steckprofil der Längsseite (4a) ausbilden.

12. Beschlagteil nach einem der vorhergehenden Ansprüche, **dadurch gekennzeichnet, dass** die mindestens eine Längsseite (4a-4c), insbesondere jede Längsseite des Grundkörpers (2), die eine Befestigungsfläche ausbildet, mindestens ein Durchgangsloch (6), insbesondere mehrere Durchgangslöcher (6), aufweist.

13. Beschlagteil nach einem der vorhergehenden Ansprüche, **dadurch gekennzeichnet, dass** das kammförmige Oberflächenprofil (19) abwechselnd hohe und tiefe Profilabsätze (20a, 20b) mit jeweils gleicher Profilbreite aufweist.

14. Verbindungsbeschlag (21) mit mindestens zwei insbesondere baugleichen
Beschlagteilen (1) nach einem der vorhergehenden Ansprüche.

15. Anordnung (30), insbesondere Möbelanordnung, mit zwei Teilen (31, 32), insbesondere Möbelteilen, die mittels eines Verbindungsbeschlags (21) nach Anspruch 14 miteinander verbunden sind, wobei ein erstes Beschlagteil (1) des Verbindungsbeschlags (21) mit seiner Befestigungsfläche an dem einen, ersten Teil (31) anliegt und daran befestigt ist und ein zweites Beschlagteil (1) des Verbindungsbeschlags (21) mit seiner Befestigungsfläche an dem anderen, zweiten Teil (32) anliegt und daran befestigt ist und wobei die erste, die zweite oder die dritte Montagefläche (8a-8c) des ersten Beschlagteils (1) und die erste, die zweite oder die dritte Montagefläche (8a-8c) des zweiten Beschlagteils (1) aneinander anliegen und mittels der Rastelemente (16, 17) miteinander verrastet sind oder die vierte Montagefläche (8d) des ersten Beschlagteils (1) und die vierte Montagefläche (8d) des zweiten Beschlagteils (1) aneinander anliegen und mittels der kammförmigen Oberflächenprofile (19) ineinandergreifen.
